# EUROPEAN PATENT APPLICATION

(11) **EP 1 707 804 A1**
(43) Date of publication of application: **04.10.2006**
(21) Application number: 06251302.3
(22) Date of filing: 11.03.2006
(51) Int. Cl.: F02P 15/02

(54) **Ignition system for an internal combustion engine**

(30) Priority: 14.03.2005 JP 2005070595
(71) Applicant: NISSAN MOTOR CO., LTD., Yokohama-shi, Kanagawa 221-0023 (JP)
(72) Inventor: Isaji, Hiroshi, Yokohama-shi, Kanagawa 221-0023 (JP); Mitsuishi, Shunichi, Yokohama-shi, Kanagawa 221-0023 (JP); Mori, Kouichi, Yokohama-shi, Kanagawa 221-0023 (JP)
(74) Representative: Holmes, Matthew William

(57) **Abstract**

A spark plug system includes a centre spark plug and a plurality of peripheral spark plugs, the spark plugs extending into a ridge-roof type combustion chamber of an internal combustion engine from the inner surface of a cylinder head and being disposed approximately on the ridgeline of the ridge-roof. The amount by which the centre plug projects into the combustion chamber from the inner surface of the cylinder head is different from the amount by which each of the peripheral plugs projects into the combustion chamber from the inner surface of the cylinder head, whereby the time in which the flame propagation of the centre plug reaches the flame propagation of the peripheral plugs is delayed.

## Description

The present invention is concerned with improvements in or relating to ignition systems for internal combustion engines and particularly, but not exclusively to an ignition system having an arrangement of spark plugs or other ignition devices within a cylinder of an internal combustion engine. The invention may find particular application with internal combustion engines having multi-point ignition in each cylinder thereof. The invention also relates to an ignition plug arrangement or structure, to a cylinder head, to an engine and to a vehicle.

Japanese Laid-open Application No. H08-4641 discloses a multi-point ignition engine in which combustion stability is provided by arranging peripheral ignition devices, for example spark plugs, at locations where the air flow is slight so that the spark from each device is not easily extinguished, thereby improving the ignition rate.

It is an aim of the invention to improve upon existing ignition systems for internal combustion engines. Other aims and advantages will become apparent from the following description, claims and drawings.

Aspects of the invention therefore provide a system, a cylinder head, an engine and a vehicle as set out in the appending claims.

According to another aspect of the invention there is provided an ignition plug arrangement or structure for a multi-point ignition engine comprising a centre plug and peripheral plugs that face from an inner wall of a cylinder head to the combustion chamber wherein the center plug is arranged such that the amount of projection from the inner wall of the cylinder head is different from that for the peripheral plugs so that a time in which a flame propagation of the centre plug reaches a flame propagation of the peripheral plugs is delayed.

According to yet another aspect of the present invention there is provided a spark plug system for an internal combustion engine having a cylinder head with an inner surface defining a part of a ridge-type or pent roof type combustion chamber, the spark plug system comprising a centre spark plug disposed at a centre of a combustion chamber, and a plurality of peripheral spark plugs disposed at a periphery of the combustion chamber approximately on a ridgeline of the combustion chamber, wherein a projection amount of the centre spark plug from an inner surface of the cylinder head is different from a projection amount of the peripheral spark plugs, whereby a time in which a flame propagation by the centre spark plug reaches a flame propagation by the peripheral spark plugs is delayed.

In one embodiment, the projection amount of the centre spark plug is greater than that of the peripheral spark plugs. In an alternative embodiment, the projection amount of the centre spark plug is smaller than that of the peripheral spark plugs.

The peripheral spark plugs may be disposed in proximity to the ridgeline of the combustion chamber, and are disposed on an upstream side of a gas flow in the combustion chamber relative to the ridgeline in a plan view.

In one embodiment, the gas flow is a swirl flow and each of the peripheral plugs is disposed on opposite sides of the ridgeline and upstream of the gas flow in the combustion chamber.

In one embodiment, the gas flow in the combustion chamber is a tumble flow and the peripheral spark plugs are disposed at locations that are closer to a gas inlet valve relative to the ridgeline of the combustion chamber.

In one embodiment, the gas flow in the combustion chamber is a reverse tumble flow and the peripheral plugs are disposed at locations that are closer to an exhaust valve relative to the ridgeline of the combustion chamber.

According to a further aspect of the invention there is provided an internal combustion engine comprising a cylinder block having a cylinder bore formed therein, a piston movably disposed in the cylinder, a cylinder head mounted on the cylinder block, the cylinder head having an inner surface defining a portion of a combustion chamber between the cylinder bore and the piston, and a plurality of spark plugs extending from the inner surface of the cylinder head into the combustion chamber, each of the spark plugs having a gap between a positive electrode and a negative electrode, the gaps of the spark plugs positioned at varying distances along a cylinder axis.

In one embodiment, the engine comprises a plurality of cylinder bores disposed in a row, wherein each of the combustion chambers thereof is formed with a ridge-roof, the ridge thereof being aligned with the direction of the row of cylinder bores, and wherein the plugs in each of the combustion chambers are substantially disposed along the ridge of the respective ridge-roof in plan view.

In one embodiment, the distances between the inner surface of the cylinder head and the gaps are differentiated, whereby the gaps are positioned at varying distances along a cylinder axis.

In one embodiment, the plurality of spark plugs includes a centre spark plug disposed approximately in the centre of the respective combustion chamber in a plan view and a pair of side spark plugs disposed substantially in the vicinity of the wall of the cylinder and displaced from the centre of the respective combustion chamber in a plan view.

Embodiments of the invention provide an improved arrangement of spark plugs in an internal combustion engine.

For example, the arrangement may include a centre spark plug and a plurality of peripheral spark plugs. The spark plugs may extend into a ridge-roof type combustion chamber of an internal combustion engine from the inner surface of a cylinder head and may be disposed approximately on the ridgeline of the ridge-roof. The amount by which the centre plug projects into the combustion chamber from the inner surface of the cylinder head may be different from the amount by which each of the peripheral plugs projects into the combustion chamber from the inner surface of the cylinder head. With this arrangement, the time in which the flame propagation of the centre plug reaches the flame propagation of the peripheral plugs may be delayed.

The various aspects, embodiments and alternatives set out in the preceding paragraphs, and in the claims, may be implemented individually or in any suitable combination.

The present invention will now be described, by way of example only, with reference to the accompanying drawings, in which:
FIG. 1A is a schematic plan view of a cylinder of a multi-point ignition combustion engine having an arrangement of spark plugs embodying a first form of the invention;
FIG. 1B is a schematic sectional view of the cylinder of FIG. 1A in elevation, taken along line 1B-1B;
FIG. 2A is a schematic plan view of a cylinder of a multi-point ignition combustion engine having an arrangement of spark plugs embodying a second form of the invention;
FIG. 2B is a schematic sectional view of the cylinder of FIG. 2A in elevation, taken along line 2B-2B;
FIG. 3A is a schematic plan view of a cylinder of a multi-point ignition combustion engine having an arrangement of spark plugs embodying a third form of the invention;
FIG. 3B is a schematic sectional view of the cylinder of FIG. 3A in elevation, taken along line 3B-3B;
FIG. 4A is a schematic plan view of a cylinder of a multi-point ignition combustion engine having an arrangement of spark plugs embodying a fourth form of the invention;
FIG. 4B is a schematic sectional view of the cylinder of FIG. 4A in elevation, taken along line 4B-4B; and
FIG. 4C is a schematic sectional view of the cylinder of FIG. 4A in elevation, taken along the line 4C-4C.

In the drawings, and in the following description, as far as possible like reference numerals indicate like parts.

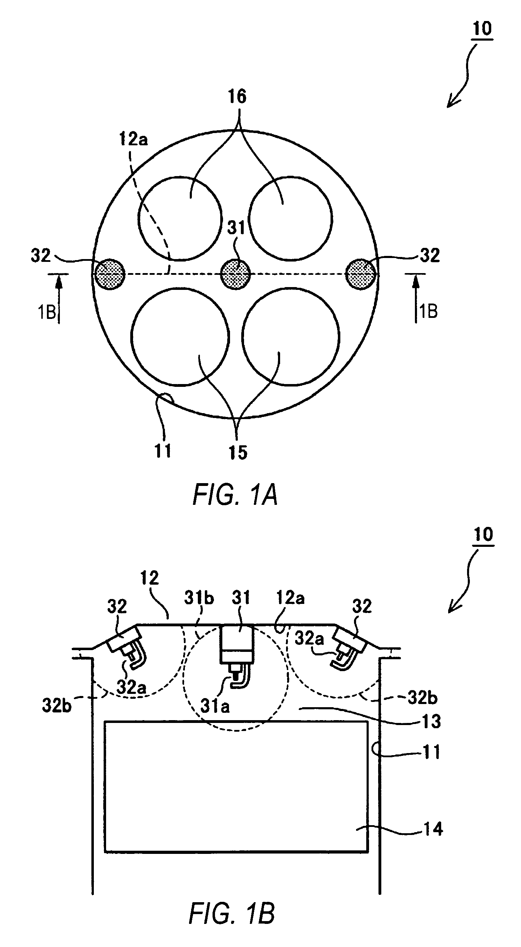

Referring to FIGS. 1A and 1B, in an internal combustion engine 10 a combustion chamber 13 is formed by a cylinder bore 11 provided in a cylinder block, a cylinder head 12 and a piston 14. The combustion chamber 13 is a ridge-roof type combustion chamber, also known as a pent-roof combustion chamber, although the term "ridge-roof" is used hereinafter for convenience.

An inlet valve 15 is disposed on one side of the ridge-roof ridgeline 12a, and an exhaust valve 16 is disposed on the other side. A centre spark plug 31 and peripheral spark plugs 32 are disposed along the ridgeline 12a. The centre spark plug 31 and the peripheral spark plugs 32 have electrodes 31a, 32a including a positive electrode and a negative electrode.

The centre plug 31 is disposed at the approximate centre of the cylinder head 12. Centre plug 31 projects from the inner surface of the cylinder head 12 so that an electrode 3 1 a thereof is close to the piston 14.

The peripheral plugs 32 are disposed in proximity to the ridge-roof ridgeline 12a, and close to the periphery of the combustion chamber 13. The amount of projection of the peripheral plugs from the inner surface of the cylinder head 12 is less than that of the centre plug 31. Thus, the peripheral plugs 32 are closer to the inner surface of the cylinder head 12 than the centre plug electrode 31a. Therefore the gaps between the positive electrode and the negative electrode of the plugs, which constitute the spark-generating regions of the spark plugs, are disposed at different axial positions within the cylinder.

The positions of the centre plug 31 and peripheral plugs 32 are determined as follows. The centre plug 31 generates sparks from the electrode 31a to propagate the flame. The propagation is shown as dotted circle 31b. The peripheral plugs 32 also generate sparks from the electrodes 32a to propagate the flame. These propagations are shown as dotted arcs 32b.

When the centre plug 31 and peripheral plugs are activated with equivalent ignition energy, the radii of the flame propagation circle 31a and arcs 32b are approximately equal. The vertical positions of the centre plug 31 and peripheral plugs 32 are disposed so that overlapping of the flame propagation circle 31a and arcs 32b is delayed (in other words, interference between propagation by each of the flames is delayed). The details of the positions are determined by preliminary testing, etc.

In the first embodiment, since the centre plug 31 and peripheral plugs 32 are disposed approximately along the ridge-roof ridge line 12a, and the amount of projection of the centre plug 31 from the inner surface of the cylinder head 12 is greater than that of the peripheral plugs so that gaps between the positive electrode and the negative electrode of the plugs are disposed at varying positions in the axial direction of the cylinder, when the central plug 31 and peripheral plugs 32 are simultaneously ignited, their flame propagations do not readily interfere with each other and are developed in a stable manner. This allows stable combustion so that emissions can be significantly reduced, thereby improving fuel consumption.

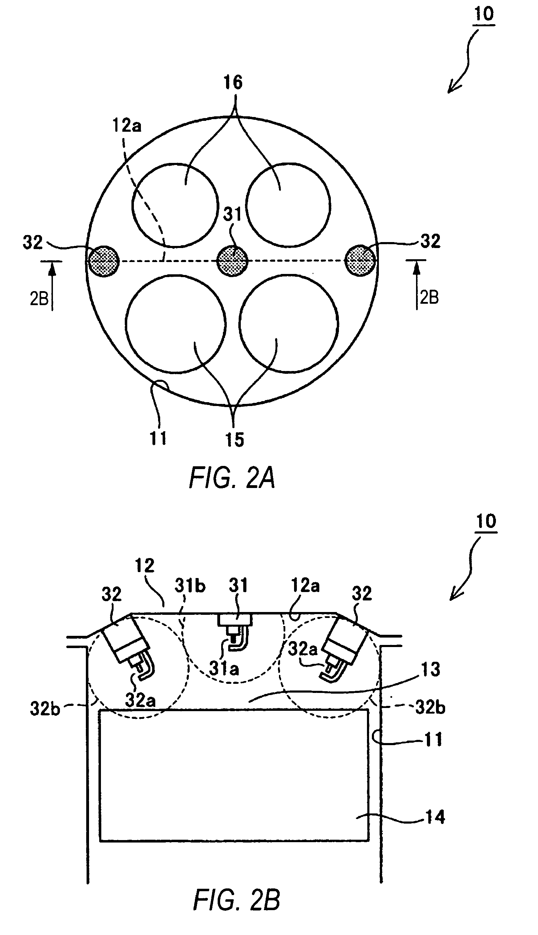

Referring to FIGS. 2A and 2B, an alternative arrangement of plugs is disclosed. In this embodiment, the amount of projection of each of the peripheral plugs 32 from the inner surface of the cylinder head 12 is greater than that of the centre plug 31.

According to this embodiment, stable development of the flames is also achieved because their respective propagations do not readily interfere with each other when the centre plug 31 and peripheral plugs 32 are ignited simultaneously and consequently stable combustion is possible, reducing emissions significantly and therefore improving fuel consumption.

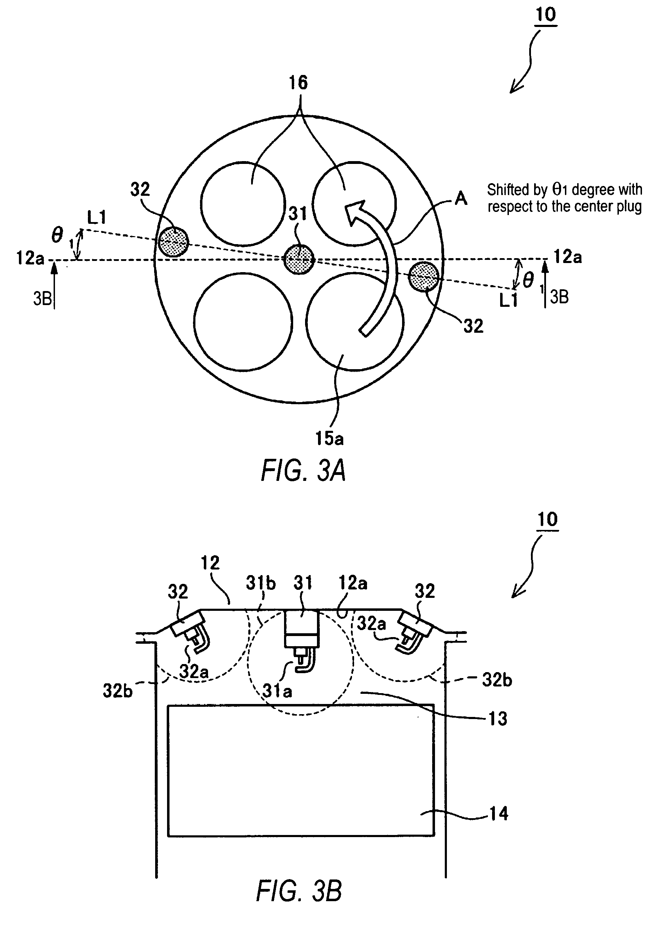

Referring to FIGS. 3A and 3B, one of the inlet valves 15a of the cylinder 11 is a swirl-making port, arranged to create a swirl flow, represented by arrow A in FIG. 3A, depending on operating conditions. Such a swirl generating means is disclosed in, for example, U.S. Pat. No. 4,768,487.

The peripheral plugs 32 are disposed on a straight line L1,L1, on the upstream side of the swirl flow, rotated through a predetermined angle θ₁ around the centre plug 31 relative to the ridgeline 12a of the ridge-roof-type combustion chamber 13.

The peripheral plugs 32 are disposed upstream of the swirl flow so that they can be ignited while the swirl flow is strong and, consequently, unburned gas can be combusted in an advantageous manner.

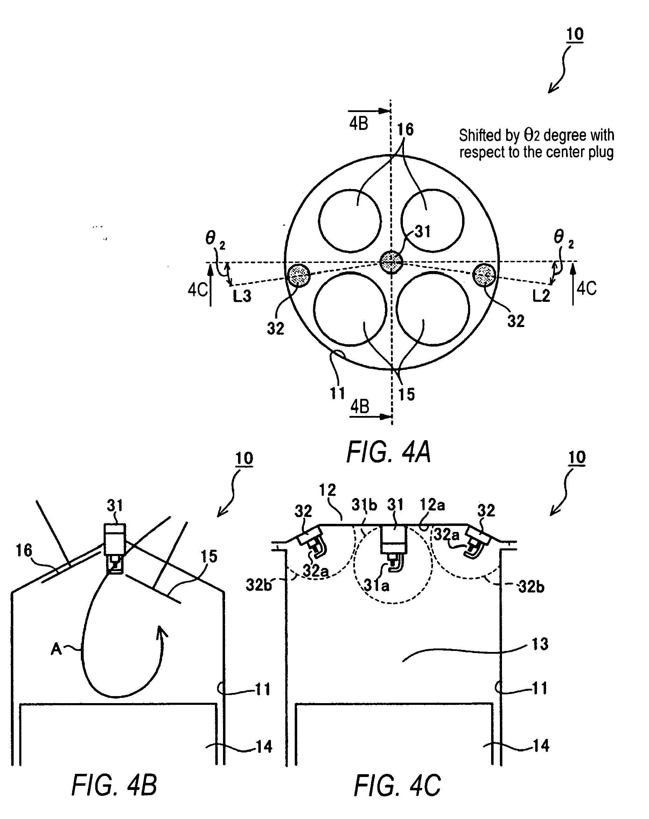

Referring to FIGS. 4A, 4B and 4C, in another embodiment the inlet port of the inlet valve 15 is a tumble generation port and is arranged to generate a tumble flow, represented by arrow A in FIG. 4(B), depending on operating conditions. In a so-called normal direction tumble flow, the air entering the cylinder from the inlet valve 15 passes down along the cylinder wall on the side near the exhaust valve 16 and passes up along the cylinder wall on the side near the inlet valve 15. On the other hand, in a so-called reverse direction tumble flow, the air entering the cylinder from the inlet valve 15 passes down along the cylinder wall on the side near the inlet valve 15 and passes up along the cylinder wall on the side near the exhaust valve 16 in the reverse direction opposite to the normal direction tumble flow.

U.S. Pat. Nos. 6,705,275 and 5,305,720 disclose a normal tumble generating device and a reverse tumble generating device, respectively.

The peripheral plugs 32 are disposed on the straight lines L2 and L3 on the upstream side of the tumble flow, which are rotated in opposite directions through a designated angle θ₂ around the centre plug 31 relative to the ridge-roof ridgeline 12a of the combustion chamber 13, so that they are relatively close to each of inlet valves 15. In other words, the peripheral plugs 32 are disposed on the lines L2, L3 which are rotated towards the upstream side of the tumble flow in a vicinity of a ceiling of the combustion chamber.

As described above, the peripheral plugs 32 are disposed upstream of the tumble flow so that they can be ignited while the tumble flow is relatively strong, and consequently, the unburned gas can be combusted in an even more preferable manner.

A variety of modifications and changes are possible without being limited to the above-described embodiments.

For example, in the embodiments of FIGS. 3A to 4C, the amount of projection of the peripheral plugs 32 from the inner surface of the cylinder head may be greater than that of the centre plug 31, as in the second embodiment.

It will also be recognized that an internal combustion engine may have a plurality of cylinder bores disposed in a row, each of the combustion chambers thereof being formed with a ridge-roof. In such an engine it is preferable that the ridge of each of the ridge-roofs be aligned with the direction of the row of cylinder bores, the spark plugs in each of the combustion chambers being substantially disposed along the ridge of the respective ridge-roof in plan view.

Thus, while the present ignition system has been described in connection with certain specific embodiments thereof, this is by way of illustration and not of limitation, and the appended claims should be construed as broadly as the prior art will permit.

This application claims priority from Japanese Patent Application No. 2005-070595, filed 14 March 2005, the contents of which are incorporated herein by reference.

## Claims

1. An ignition system for an internal combustion engine having a cylinder defining, at least in part, a combustion chamber, the system comprising:
a first ignition device arranged to project into the combustion chamber by a first amount; and
at least one further ignition device arranged to project into the combustion chamber by a second amount;
the first amount being different from the second amount.

2. A system as claimed in claim 1 for an internal combustion engine having a cylinder head with an inner surface defining a part of the combustion chamber, wherein:
the first ignition device comprises a centre spark plug disposed at a centre of the combustion chamber;
the at least one further ignition device includes a plurality of peripheral spark plugs disposed at a periphery of the combustion chamber approximately on a ridgeline of the combustion chamber; and
wherein the amount by which the centre spark plug projects into the combustion chamber from the inner surface of the cylinder head is different from the amount by which the peripheral spark plugs project into the combustion chamber from the inner surface of the cylinder head, the arrangement being such that a time in which a flame propagation by the centre spark plug reaches a flame propagation by the peripheral spark plugs is delayed.

3. A system as claimed in claim 1 or claim 2 wherein the projection amount of the centre spark plug is greater than that of the peripheral spark plugs.

4. A system as claimed in claim 1 or claim 2 wherein the projection amount of the centre spark plug is smaller than that of the peripheral spark plugs.

5. A system as claimed in any of claims 2 to 4 wherein the peripheral spark plugs are disposed in proximity to the ridgeline of the combustion chamber, and are disposed on an upstream side of a gas flow in the combustion chamber relative to the ridgeline in a plan view.

6. A system as claimed in claim 5 wherein the gas flow is a swirl flow and each of the peripheral plugs are disposed on opposite sides of the ridgeline and upstream of the gas flow in the combustion chamber.

7. A system as claimed in claim 5, wherein the gas flow in the combustion chamber is a tumble flow and the peripheral spark plugs are disposed at locations that are closer to a gas inlet valve relative to the ridgeline of the combustion chamber.

8. A system as claimed in claim 5 wherein the gas flow in the combustion chamber is a reverse tumble flow and the peripheral plugs are disposed at locations that are closer to an exhaust valve relative to the ridgeline of the combustion chamber.

9. A cylinder head for defining at least a part of a combustion chamber of an internal combustion engine, the cylinder head having means for holding a plurality of ignition devices, such as spark plugs, such that, in use, a first one of said devices projects into the combustion chamber by an amount different from that of another of said devices.

10. An internal combustion engine having a system or a cylinder head as claimed in any preceding claim.

11. An internal combustion engine comprising:
a cylinder block having a cylinder bore formed therein,
a piston movably disposed in the cylinder;
a cylinder head mounted on the cylinder block, the cylinder head having an inner surface defining a portion of a combustion chamber between the cylinder bore and the piston; and
a plurality of spark plugs extending from the inner surface of the cylinder head into the combustion chamber, each of the spark plugs having a gap between a positive electrode and a negative electrode, the gaps of the spark plugs being positioned at different distances along an axis of the cylinder.

12. An engine as claimed in claim 11 comprising a plurality of said cylinder bores disposed in a row, wherein each of the combustion chambers thereof is formed with a ridge-roof, the ridge thereof being aligned with the direction of the row of cylinder bores, and wherein the plugs in each of the combustion chambers are substantially disposed along the ridge of the respective ridge-roof in plan view.

13. A vehicle having a system, a cylinder head or an engine as claimed in any preceding claim.
